(19) Europäisches Patentamt / European Patent Office / Office européen des brevets

(11) **EP 2 118 225 B1**

(12) **FASCICULE DE BREVET EUROPEEN**

(45) Date de publication et mention de la délivrance du brevet:
**01.03.2017 Bulletin 2017/09**

(21) Numéro de dépôt: **07872020.8**

(22) Date de dépôt: **21.12.2007**

(51) Int Cl.:
*C09K 3/10* *(2006.01)*       *B65D 83/14* *(2006.01)*

(86) Numéro de dépôt international:
**PCT/FR2007/052611**

(87) Numéro de publication internationale:
**WO 2008/087352 (24.07.2008 Gazette 2008/30)**

(54) **JOINT DE VALVE OU DE POMPE**

PUMPEN- ODER VENTILDICHTUNG

PUMP OR VALVE SEAL

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **28.12.2006 FR 0655998**
**04.07.2007 FR 0756266**

(43) Date de publication de la demande:
**18.11.2009 Bulletin 2009/47**

(73) Titulaire: **Aptar France SAS**
**27110 Le Neubourg (FR)**

(72) Inventeur: **LEONE, Patrice**
**F-27400 Acquigny (FR)**

(74) Mandataire: **CAPRI**
**33, rue de Naples**
**75008 Paris (FR)**

(56) Documents cités:
WO-A-97/01611       FR-A1- 2 787 424
FR-A1- 2 855 829     GB-A- 2 410 500
US-A- 3 783 091      US-A1- 2005 241 636

**Description**

La présente invention concerne un joint de valve ou de pompe et un dispositif de produit fluide comportant un tel joint.

Plus particulièrement, les joints de l'invention sont adaptés à être utilisés d'une part dans des dispositifs de distribution de produit fluide sous pression comportant une valve, notamment une valve doseuse, et d'autre part dans les dispositifs de distribution de produit fluide non pressurisés comportant une pompe.

Les joints utilisés dans le cadre de dispositifs de distribution de produit fluide sous pression, tels que des dispositifs aérosols, doivent satisfaire un certain nombre de conditions et remplir certaines exigences. Ainsi, ces joints doivent fournir de bonnes propriétés mécaniques, présenter des propriétés de gonflement appropriées au propulseur, fournir un coefficient de frottement adéquat, être étanche au propulseur et assurer une bonne résistance à l'humidité. Ces caractéristiques sont notamment particulièrement importantes pour les joints dynamiques qui forment l'étanchéité entre la soupape mobile de la valve et la chambre de valve qui contient la dose à expulser.

D'autre part, les joints utilisés dans des dispositifs de distribution de produit fluide non pressurisés, et notamment dans les pompes, doivent également satisfaire plusieurs conditions et remplir un certain nombre d'exigences. Ainsi, ces joints doivent présenter une bonne résistance à la chaleur, être imperméables aux gaz, et être évidemment non toxiques. Ils doivent aussi présenter une bonne tenue aux solutions, notamment aux solutions eau/éthanol. Ils doivent fournir une bonne résistance à l'humidité, aux agents chimiques, aux solvants, acides, bases et garantir une bonne tenue aux agents de conservation, tels que les ammoniums quaternaires, ainsi qu'une résistance à l'attaque microbiologique et aux solutions de sels minéraux.

Une mauvaise compatibilité chimique entre le joint et le produit contenu par le distributeur, peut entraîner des migrations entre le joint et le contenu.

Par exemple, vis-à-vis des formulations pharmaceutiques, avec lesquelles ces joints sont en contact, des extractibles peuvent être mis en évidence, qui sont des migrants potentiels. Parmi ces composés : des résidus d'oligomères, des solvants résiduels, des agents de vulcanisation, antioxydants, lubrifiants, plastifiants, et autres produits peuvent être retrouvés.

Les fluides en contact avec le joint peuvent notamment avoir plusieurs types d'influences néfastes.

Le joint risque de subir une attaque chimique par des fluides en contact. Dans ce cas, il y a dégradation de la matière, le joint pouvant devenir cassant, mou ou parcouru de craquelures. Bien entendu il y a alors risque de rupture d'étanchéité.

Par ailleurs l'absorption par le joint du fluide en contact peut entraîner un gonflement du joint, ce qui peut avoir plusieurs conséquences, telles qu'une modification des propriétés de la matière du joint, une rigidification, une expulsion du joint par manque de place.

L'extraction d'un composant du joint par le fluide en contact peut aussi entraîner une modification des propriétés de la matière, et une diminution de la section du joint pouvant entraîner des fuites.

Les propriétés mécaniques, physico-chimiques tout autant que la compatibilité chimique sont à prendre en considération. La flexibilité du joint, sa résistance à la flexion répétée et sa résistance au frottement ont une influence considérable sur la longévité du joint.

Les propriétés d'élasticité, telles que la DRC (Déformation Rémanente à la Compression), peuvent influencer la bonne tenue du joint à une application particulière. La DRC est essentiellement une mesure de la capacité du joint à maintenir sa force d'étanchéité et donc à assurer sa fonction. La valeur de la DRC dépend des conditions de fonctionnement et de la durée.

Les documents FR2855829, WO97/01611, US2005/241636, GB2410500, US3783091 et FR2787424 décrivent des joints de l'état de la technique.

La présente invention a donc pour but de fournir des joints de valve ou de pompe qui remplissent de manière optimale les exigences susmentionnées.

La présente invention a pour but de fournir un joint de valve ou de pompe permettant d'améliorer les propriétés élastiques et la compatibilité du joint avec les principes actifs.

La présente invention a ainsi pour but de fournir des joints capables d'offrir des durées de vie et de fonctionnement accrues, grâce à la combinaison de leurs propriétés d'élasticité, de DRC et de compatibilité chimique.

La présente invention a aussi pour but de fournir des joints de valve ou de pompe qui sont simples et peu coûteux à fabriquer.

La présente invention a donc pour objet un joint de valve ou de pompe tel que décrit dans la revendication 1. Les revendications dépendantes décrivent des modes de réalisation avantageux.

La présente invention a aussi pour objet un dispositif de distribution de produit fluide comprenant au moins un joint tel que décrit ci-dessus.

Sur les dessins :

- la figure 1 représente un graphe illustrant la DRC ; et
- la figure 2 représente un graphe illustrant la dégradation de principe actif.

Le joint selon l'invention peut être utilisé aussi bien dans un dispositif de distribution de produit fluide sous pression que dans un dispositif de distribution de produit fluide non pressurisé. Il peut servir à la fois de joint statique, par exemple un joint de col faisant l'étanchéité entre une pompe ou une valve et un réservoir, et de joint dynamique, en contact d'un élément mobile, par exemple une tige de piston d'une pompe ou une soupape de valve.

Dans un distributeur sous pression, le dispositif comprend une valve pourvue d'une soupape mobile, ladite valve étant montée sur un réservoir contenant le produit fluide et un propulseur avec ou sans alcool. Le propulseur comprend un gaz de type HFC-134a ou HFC-227. Le joint selon l'invention peut alors être utilisé comme joint de col entre la valve et le réservoir et/ou comme joint dynamique dans lequel coulisse la soupape.

Dans le deuxième cas, le distributeur (non pressurisé) comprend une pompe montée sur un réservoir contenant du produit fluide. Le joint selon l'invention peut alors être utilisé par exemple entre le corps de pompe et le réservoir (joint statique) ou contre la tige de piston (joint dynamique).

Les formulations de joints comprennent habituellement un ou plusieurs polymères de base, au(x)quel(s) peuvent être ajoutés notamment des charges minérales ou des charges noir de carbone, des additifs, des agents de vulcanisation, des colorants, des agents de mise en oeuvre ou des plastifiants.

Le joint de valve ou de pompe selon la présente invention comprend au moins un élastomère et une ou plusieurs charges minérales basiques ayant un pH supérieur à 8, dont quelques exemples sont donnés ci-après.

Selon une première variante, le joint comporte en tant que polymère de base essentiellement un élastomère nitrile (NBR) ou nitrile hydrogéné (HNBR). En tant que joint de valve, il s'avère qu'au contact d'un propulseur du type HFC-134a ou HFC-227, avec ou sans alcool (par exemple de l'éthanol), ce type d'élastomère présente d'excellentes propriétés mécaniques, de sorte qu'il est particulièrement bien adapté à être utilisé en tant que joint dynamique. Bien entendu il est également utilisable en tant que joint de col dans un tel dispositif aérosol. Il présente également l'avantage de s'allier facilement avec d'autres matériaux élastomères, tels que par exemple le polychloroprène (CR), le polyoctène éthylène (POE), le butyl (IIR), l'halobutyl (CIIR ou BIIR), l'éthylène propylène (EP) ou l'éthylène propylène diène (EPDM). Ceci permet d'optimiser les propriétés des joints, notamment en fonction du type de propulseur (HFC-134 ou HFC-227, avec ou sans alcool) et/ou du principe actif à distribuer.

Une deuxième variante consiste à utiliser le polychloroprène (CR) en tant qu'élastomère de base. Des alliages de polychloroprène avec par exemple du POE et/ou du CIIR ou du BIIR et/ou de l'EP ou de l'EPDM, ou du HNBR, permettant d'obtenir des joints ayant de bonnes propriétés mécaniques.

Selon une troisième variante de réalisation, le joint peut contenir de l'éthylène propylène (EP) et/ou de l'éthylène propylène diène (EPDM) en tant qu'élastomère de base. Les EP ou EPDM confèrent au joint un bon niveau de propriétés mécaniques. De plus, comparés à d'autres matériaux, tels que le nitrile ou le chloroprène, les joints à base d'EPDM possèdent une meilleure inertie vis-à-vis des principes actifs et ont des niveaux d'extractibles peu élevés. Des alliages d'EP et/ou d'EPDM avec par exemple le CR, POE, NBR, HNBR, IIR, CIIR ou BIIR, EVA permettent d'optimiser les propriétés des joints, notamment en fonction du type de propulseur et/ou du principe actif à distribuer.

Selon une quatrième variante de réalisation, le joint peut contenir un élastomère polyoléfine tel que le polyoctène éthylène (POE) ou le polybutène éthylène (PBE), qui apportent aux joints des propriétés de faible gonflement en contact avec des propulseurs du type HFC, avec ou sans alcool.

Selon une autre variante, il est également envisageable de réaliser des joints comportant comme composant élastomère de base du butyl (IIR) ou de l'halobutyl (CIIR ou BIIR). Ce type de joint présente une bonne résistance à l'humidité ainsi que de faibles gonflements dans des propulseurs du type HFC.

Il est encore envisageable selon une autre variante de réaliser des joints comprenant comme composant élastomère de base de l'éthylène acétate de vinyle (EVA). Ce type de joint présente également de bonnes propriétés mécaniques et de faibles gonflements en contact avec des propulseurs de type HFC, avec ou sans alcool. Un alliage d'EVA avec notamment un ou plusieurs des matériaux élastomères décrits ci-dessus (CR, POE, IIR, CIIR, BIIR, EP, EPDM) permet d'optimiser les propriétés des joints, notamment en fonction du type de propulseur et/ou du principe actif à distribuer.

Les charges minérales sont généralement utilisées dans ce type de joints pour améliorer certaines de leurs caractéristiques (propriétés mécaniques, frottement, extractibles...).

Les matériaux de joints selon l'invention comportent une ou plusieurs charges minérales basiques en association avec au moins un élastomère, tel que ceux décrits ci-dessus.

Alors que des silices à pH acide sont généralement employées dans les applications de valves doseuses, le joint selon l'invention comporte au moins une charge minérale basique dont le pH est supérieur à 8. Selon l'invention, ladite au moins une charge minérale basique comprend de l'hydroxyde d'oxyde d'aluminium (AIOOH). Avantageusement, le joint peut comporter d'autres charges minérales basiques avantageusement choisies dans le groupe constitué de l'hydroxyde d'aluminium (Al(OH)$_3$), l'hydroxyde de magnésium (Mg(OH)$_2$), la terre de diatomée, la wollastonite, l'aluminosilicate de sodium et magnésium, la silice à pH basique, la craie (carbonate de calcium).

Les charges minérales basiques employées dans les joints selon la présente invention peuvent en outre être associées à une ou plusieurs autres charges minérales, telles que le kaolin, la silice à pH acide, et/ou la craie.

L'utilisation d'une ou plusieurs charges minérales basiques dans les matériaux de joint selon l'invention permet d'améliorer les propriétés d'élasticité telles que la DRC et/ou la compatibilité avec le principe actif.

La DRC (déformation rémanente à la compression) appelée également « Compression Set », s'exprime en pourcentage et permet de déterminer la rémanence ou capacité du caoutchouc à retrouver ses dimensions initiales après avoir subi une déformation.

Le test de DRC consiste à écraser un plot de caoutchouc (diamètre 6 mm, épaisseur 6 mm) de 25% de sa hauteur initiale. Cette contrainte est maintenue pendant 22 heures à 40°C. Après suppression de la contrainte, le plot de caoutchouc est laissé 30 minutes au repos. Puis on mesure de nouveau sa hauteur.

La DRC est calculée de la façon suivante :

$$DRC(\%) = \frac{Hi - Hf}{Hi - Hc}$$

Hi : hauteur initiale
Hf : hauteur finale
Hc : hauteur comprimée

Plus la valeur (pourcentage de DRC) est faible, plus le matériau est considéré comme élastique.

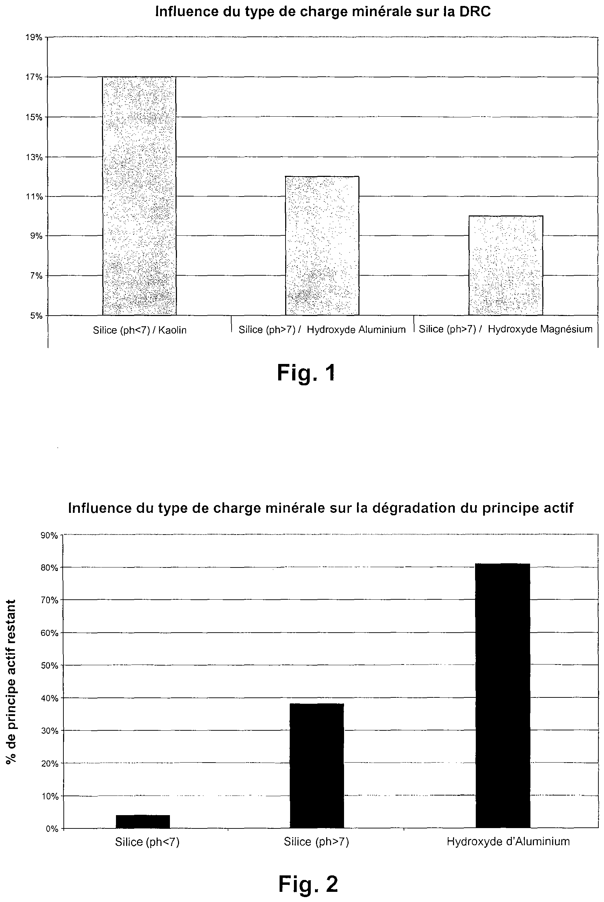

Comme visible sur le graphique de la figure 1, représentant l'influence du type de charge minérale sur la DRC, les joints qui comportent de la silice à pH basique supérieur à 8 associée à de l'hydroxyde d'aluminium ou de la silice à pH basique supérieur à 8 associée à de l'hydroxyde de magnésium ont une DRC inférieure (respectivement égale à 12% et 10%) à la DRC du joint comprenant de la silice à pH acide associée à du kaolin (17%).

Ainsi les joints selon l'invention, comportant le type de charges minérales basiques évoquées ci-dessus, présentent, en comparaison avec les joints comportant des silices à pH acide, une valeur de DRC inférieure, et donc une élasticité supérieure.

En outre, des tests, tels que le test de dégradation du principe actif, ont démontré que l'utilisation de charges minérales basiques dans les joints selon la présente invention apporte une meilleure compatibilité de ces joints vis à vis des principes actifs.

Le test de dégradation du principe actif consiste à introduire cinq pastilles de caoutchouc dans un bidon, et d'y ajouter une formulation avec un principe actif en solution.

Ces bidons pressurisés sont placés en étuve pour vieillissement accéléré.

La quantité d'actif restante dans chaque bidon est quantifié par HPLC à chaque point de stabilité (T0, T=2 semaines et T=5 semaines pour l'actif étudié).

Plus la quantité d'actif restante est importante, plus le matériau testé est compatible avec l'actif.

Les résultats de test représentés sur le graphique de la figure 2 montrent que pour les joints comportant des charges minérales basiques, telles que la silice à pH basique ou l'hydroxyde d'aluminium, la quantité de principe actif restante est plus importante (respectivement 38% et 81 %), que dans le cas des joints utilisant de la silice acide (4%). Les joints selon la présente invention, qui utilisent au moins une charge minérale basique dont le pH est supérieur à 8, sont donc plus compatibles avec le principe actif, que les joints utilisant uniquement une charge minérale acide. Pour les tests de la figure 2, la silice à pH acide avait un pH = 6, la silice à pH basique avait un pH = 9 et l'hydroxyde d'aluminium avait un pH = 9.

La facilité de fabrication et le coût modéré sont également des aspects avantageux des joints de la présente invention.

Il est à noter que l'aluminosilicate de sodium et magnésium est un produit de synthèse. Contrairement, aux produits qui sont extraits du sol (tel que par exemple le silicate de magnésium ou talc), le prix de revient d'un produit de synthèse est inférieur et il ne se pose pas de problème de disponibilité ou de pénurie, puisqu'il peut être aisément fabriqué en laboratoire en fonction des besoins. L'utilisation d'aluminosilicate de sodium et magnésium, ou d'une autre charge minérale basique obtenue par synthèse ou contenant un produit de synthèse, est donc avantageuse.

Bien que des exemples d'élastomères et de charges minérales basiques entrant dans la composition des joints selon la présente invention aient été décrits ci-dessus en référence aux diverses variantes possibles de formulation des joints, la présente invention n'est pas limitée à ces exemples, et la portée du brevet est définie par les revendications annexées.

## Revendications

1. Joint de valve ou de pompe destiné à un dispositif de distribution de produit fluide, **caractérisé en ce que** ledit joint comprend au moins un élastomère et au moins une charge minérale basique, dont le pH est supérieur à 8, ladite au moins une charge minérale basique comprenant de l'hydroxyde d'oxyde d'aluminium (AlOOH).

2. Joint selon la revendication 1, dans lequel ladite au moins une charge minérale basique comprend de l'hydroxyde d'aluminium ($Al(OH)_3$).

3. Joint selon la revendication 1 ou 2, dans lequel ladite au moins une charge minérale basique comprend de l'hydroxyde de magnésium ($Mg(OH)_2$).

4. Joint selon l'une quelconque des revendications précédentes, dans lequel ladite au moins une charge minérale basique comprend de la terre de diatomée.

5. Joint selon l'une quelconque des revendications précédentes, dans lequel ladite au moins une charge minérale basique comprend de la wollastonite.

6. Joint selon l'une quelconque des revendications précédentes, dans lequel ladite au moins une charge minérale basique comprend un produit de synthèse.

7. Joint selon l'une quelconque des revendications précédentes, dans lequel ladite au moins une charge minérale basique comprend de l'aluminosilicate de sodium et magnésium.

8. Joint selon l'une quelconque des revendications précédentes, dans lequel ladite au moins une charge minérale basique comprend de la silice à pH supérieur à 8.

9. Joint selon l'une quelconque des revendications précédentes, dans lequel ladite au moins une charge minérale basique comprend de la craie (carbonate de calcium).

10. Joint selon l'une quelconque des revendications précédentes, dans lequel ledit au moins un élastomère comprend un ou plusieurs des composants suivants : nitrile (NBR), nitrile hydrogéné (HNBR), polychloroprène (CR), éthylène propylène (EP), éthylène propylène diène (EPDM), élastomère polyoléfine, tel que polyoctène éthylène (POE) ou polybutène éthylène (PBE), butyl (IIR), Halobutyl, tel que le chlorobutyl (CIIR) ou le bromobutyl (BIIR), et/ou éthylène acétate de vinyle (EVA).

11. Joint selon l'une quelconque des revendications précédentes, dans lequel le joint comprend en outre au moins une autre charge minérale associée à ladite au moins une charge minérale basique.

12. Joint selon la revendication 11, dans lequel ladite au moins une autre charge minérale associée comprend du kaolin, de la silice (pH<7), et/ou de la craie.

13. Joint selon l'une quelconque des revendications précédentes, dans lequel ledit joint est un joint statique, tel qu'un joint de col disposé entre une valve ou une pompe et un réservoir, et/ou un joint dynamique, en contact avec un élément mobile, tel qu'une tige de piston de pompe ou une soupape de valve.

14. Dispositif de distribution de produit fluide, comprenant au moins un joint selon l'une quelconque des revendications précédentes.

**Patentansprüche**

1. Ventil- oder Pumpendichtung für eine Ausgabevorrichtung für ein fluides Produkt, **dadurch gekennzeichnet, dass** die Dichtung mindestens ein Elastomer und mindestens einen mineralischen basischen Füllstoff aufweist, dessen pH-Wert größer als 8 ist, wobei der mindestens eine mineralische basische Füllstoff Aluminiumoxidhydroxid (AlOOH) aufweist.

2. Dichtung nach Anspruch 1, wobei der mindestens eine mineralische basische Füllstoff Aluminiumhydroxid (Al(OH)$_3$) aufweist.

3. Dichtung nach Anspruch 1 oder 2, wobei der mindestens eine mineralische basische Füllstoff Magnesiumhydroxid (Mg(OH)$_2$) aufweist.

4. Dichtung nach einem der vorhergehenden Ansprüche, wobei der mindestens eine mineralische basische Füllstoff Diatomeenerde aufweist.

5. Dichtung nach einem der vorhergehenden Ansprüche, wobei der mindestens eine mineralische basische Füllstoff Wollastonit aufweist.

6. Dichtung nach einem der vorhergehenden Ansprüche, wobei der mindestens eine mineralische basische Füllstoff ein Syntheseprodukt aufweist.

7. Dichtung nach einem der vorhergehenden Ansprüche, wobei der mindestens eine mineralische basische Füllstoff Natrium- und Magnesiumaluminosilikat aufweist.

8. Dichtung nach einem der vorhergehenden Ansprüche, wobei der mindestens eine mineralische basische Füllstoff Kieselsäureanhydrid mit einem pH-Wert größer als 8 aufweist.

9. Dichtung nach einem der vorhergehenden Ansprüche, wobei der mindestens eine mineralische basische Füllstoff Kreide (Kalziumkarbonat) aufweist.

10. Dichtung nach einem der vorhergehenden Ansprüche, wobei das mindestens eine Elastomer einen oder mehrere der folgenden Bestandteile aufweist: Nitril (NBR), Nitrilwasserstoff (HNBR), Polychloropren (CR), Ethylenpropylen (EP), Ethylenpropylendien (EPDM), Polyolefinkautschuk, wie Polyoktenethylen (POE) oder Polybutenethylen (PBE), Butyl (IIR), Halobutyl, wie Chlorobutyl (CIIR) oder Bromobutyl (BIIR), und/oder Ethylenvinylacetat (EVA).

11. Dichtung nach einem der vorhergehenden Ansprüche, wobei die Dichtung des Weiteren mindestens einen weiteren mineralischen Füllstoff aufweist, der dem mindestens einen mineralischen basischen Füllstoff zugeordnet ist.

12. Dichtung nach Anspruch 11, wobei der mindestens eine weitere zugeordnete mineralische Füllstoff Kaolin, Kieselsäureanhydrid (pH-Wert < 7) und/oder Kreide aufweist.

13. Dichtung nach einem der vorhergehenden Ansprüche, wobei die Dichtung eine statische Dichtung, wie eine Kragendichtung, die zwischen einem Ventil oder einer Pumpe und einem Behälter angeordnet ist, und/oder eine dynamische Dichtung in Kontakt mit einem beweglichen Element ist, wie einer Pumpenkolbenstange oder einem federgespannten Ventil des Ventils.

14. Ausgabevorrichtung für ein fluides Produkt, aufweisend mindestens eine Dichtung nach einem der vorhergehenden Ansprüche.

**Claims**

1. A pump or valve gasket for a fluid dispenser device, said gasket being **characterized in that** it comprises at least one elastomer and at least one basic inorganic filler having pH that is greater than 8, said at least one basic inorganic filler comprising aluminum oxide hydroxide (AlOOH).

2. A gasket according to claim 1, in which said at least one basic inorganic filler comprises aluminum hydroxide $(Al(OH)_3)$.

3. A gasket according to claim 1 or 2, in which said at least one basic inorganic filler comprises magnesium hydroxide $(Mg(OH)_2)$.

4. A gasket according to any preceding claim, in which said at least one basic inorganic filler comprises diatomaceous earth.

5. A gasket according to any preceding claim, in which said at least one basic inorganic filler comprises wollastonite.

6. A gasket according to any preceding claim, in which said at least one basic inorganic filler comprises a synthetic substance.

7. A gasket according to any preceding claim, in which said at least one basic inorganic filler comprises magnesium and sodium aluminosilicate.

8. A gasket according to any preceding claim, in which said at least one basic inorganic filler comprises silica having pH that is greater than 8.

9. A gasket according to any preceding claim, in which said at least one basic inorganic filler comprises chalk (calcium carbonate).

10. A gasket according to any preceding claim, in which said at least one elastomer comprises one or more of the following components: nitrile rubber (NBR); hydrogenated nitrile rubber (HNBR); polychloroprene rubber (CR); ethylene propylene (EP); ethylene propylene diene (EPDM); elastomer polyolefin, such as polyoctene ethylene (POE) or polybutene ethylene (PBE); butyl rubber (IIR); halobutyl rubber, such as chlorobutyl rubber (CIIR) or bromobutyl rubber (BIIR), and/or ethylene vinyl acetate (EVA).

11. A gasket according to any preceding claim, in which the gasket further includes at least one other inorganic filler that is associated with said at least one basic inorganic filler.

12. A gasket according to claim 11, in which said at least one other associated inorganic filler comprises kaolin, silica (pH<7), and/or chalk.

13. A gasket according to any preceding claim, in which said gasket is a static gasket, such as a neck gasket that is disposed between a valve or a pump and a reservoir, and/or a dynamic gasket that is in contact with a movable element, such as a pump piston rod or a valve member.

14. A fluid dispenser device including at least one gasket according to any preceding claim.

**Influence du type de charge minérale sur la DRC**

## Fig. 1

**Influence du type de charge minérale sur la dégradation du principe actif**

## Fig. 2

**EP 2 118 225 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2855829
- WO 9701611 A
- US 2005241636 A
- GB 2410500 A
- US 3783091 A
- FR 2787424